(19) Europäisches Patentamt
European Patent Office
Office européen des brevets

(11) **EP 3 526 930 B1**

(12) **EUROPÄISCHE PATENTSCHRIFT**

(45) Veröffentlichungstag und Bekanntmachung des Hinweises auf die Patenterteilung:
**30.06.2021 Patentblatt 2021/26**

(21) Anmeldenummer: **17714167.8**

(22) Anmeldetag: **22.03.2017**

(51) Int Cl.:
*H04L 12/24* *(2006.01)*   *H04J 3/06* *(2006.01)*
*H04L 29/06* *(2006.01)*

(86) Internationale Anmeldenummer:
**PCT/EP2017/056807**

(87) Internationale Veröffentlichungsnummer:
**WO 2018/068900 (19.04.2018 Gazette 2018/16)**

(54) **VERFAHREN ZUR ÜBERWACHUNG EINES NETZWERKS AUF ANOMALIEN**

METHOD FOR MONITORING A NETWORK FOR ANOMALIES

PROCÉDÉ DE SURVEILLANCE D'UN RÉSEAU POUR DES ANOMALIES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.10.2016 DE 102016219663**

(43) Veröffentlichungstag der Anmeldung:
**21.08.2019 Patentblatt 2019/34**

(73) Patentinhaber: **Conti Temic microelectronic GmbH**
**90411 Nürnberg (DE)**

(72) Erfinder:
• **JOOS, Uli**
**88149 Nonnenhorn (DE)**

• **GERSTER, Florian**
**88690 Uhldingen-Mühlhofen (DE)**
• **LIEDER, Lorenz**
**88400 Biberach a.d. Riss (DE)**

(74) Vertreter: **Continental Corporation**
**c/o Continental Automotive GmbH**
**Intellectual Property**
**Postfach 83 01 16**
**81701 München (DE)**

(56) Entgegenhaltungen:
**EP-A1- 1 087 530   EP-A2- 1 696 570**
**DE-A1- 3 033 173   US-A1- 2014 149 805**

**Beschreibung**

Die Erfindung betrifft ein Verfahren gemäß dem Oberbegriff des Patentanspruchs 1 zur Überwachung eines zur Datenübertragung vorgesehenen Netzwerks auf Anomalien.

Aus US 2015 / 0 074 267 A1 ist eine Erkennung einer Anomalie in einem Netzwerk bekannt, das selbstständig proaktiv Fehler und Anomalien erkennen soll.

US 2014/149805 A1 offenbart ein Verfahren zur Überwachung eines zur Datenübertragung vorgesehenen Netzwerks aus mehreren über fest vorgegebene Signalübertragungswege miteinander verbundenen Geräten.

Bekannte Verfahren zur Anomaliedetektion in Netzwerken nutzen beispielsweise Vergleiche von Zeitmustern. Dabei wird aus einer beobachteten Abweichung von einer erwarteten Periodizität von über das Netzwerk übertragenen Signalen ein Vorliegen einer Anomalie abgeleitet.

Andere Verfahrensansätze untersuchen beispielsweise Dateninhalte von über das Netzwerk übertragenen Signalen hinsichtlich eines charakteristischen Musters einer Signalquelle.

Grundsätzlich bekannt ist es auch, Laufzeitdifferenzmuster von über das Netzwerk übertragenen Signalen mittels oder durch Verwendung des bekannten Precision-Time-Protocol (PTP) nach IEEE-1588 zu gewinnen und zur Anomaliedetektion auszuwerten. Beim PTP werden in über das Netzwerk übertragene Signale oder Nachrichten automatisch jeweilige Zeitstempel eingefügt, welche eine Bestimmung einer Verzögerungszeit und eines Zeitoffsets zwischen einer sendenden und einer empfangenden Station erlaubt. Dieser Ansatz setzt jedoch entsprechend ausgerüstete Stationen oder Transceiver sowie eine geeignete softwareseitige Auswertung voraus. Das PTP wird primär zur Realisierung von harten Echtzeitanforderungen, etwa der Sicherstellung der Gleichzeitigkeit an verschiedenen Stationen in einem Netzwerk, vorrangig in einem Ethernet-Netzwerk, eingesetzt. Nachteilig ist dabei jedoch, dass alle Stationen in dem jeweiligen Netzwerk aktiv Zeitstempel aussenden und empfangen müssen.

Aufgabe der vorliegenden Erfindung ist es, ein Verfahren zur Überwachung eines datenübertragenden Netzwerks auf Anomalien anzugeben, welches mit möglichst geringem Zusatzaufwand an -gewendet werden kann und möglichst geringe Anforderungen an das Netzwerk stellt.

Diese Aufgabe wird erfindungsgemäß durch ein Verfahren mit den Merkmalen des unabhängigen Patentanspruchs gelöst. Vorteilhafte Ausgestaltungen der Erfindung sind in den abhängigen Ansprüchen angegeben.

Das erfindungsgemäße Verfahren dient zur Überwachung eines zur Datenübertragung vorgesehenen Netzwerks aus mehreren über fest vorgegebene Signalübertragungswege miteinander verbundenen Geräten auf Anomalien. Das Netzwerk umfasst also sowohl die Geräte als auch die Signalübertragungswege oder ist aufgebaut aus den Geräten und den Signalübertragungswegen. Die Signalübertragungswege können beispielsweise elektrische Leitungen sein, wobei es festgelegt oder vorgegeben und insbesondere gleichbleibend und konstant ist, über welche Leitungsabschnitte ein Signal läuft. Mit anderen Worten legt also jedes von einem bestimmten Gerät gesendetes Signal immer denselben Weg in dem Netzwerk zurück. Bei dem Verfahren ist es vorgesehen, dass eines der Geräte ein Mastergerät ist, welches einen Zähler und eine Triggereinrichtung aufweist, von der ein vorgegebenes Signalmerkmal eines über das Netzwerk übertragenen Signals erfasst wird. Das über das Netzwerk übertragene Signal kann eine Datenübertragung, ein Datenpaket oder ein Datenstrom sein und kann auch als Nachricht bezeichnet werden. Auf das Erfassen des Signalmerkmals hin wird ein zu einem Zeitpunkt dieses Erfassens korrespondierender Masterzählerstand des Zählers des Mastergeräts ausgelesen. Ein Zeitpunkt eines Erfassens und/oder Auslesens eines Zählerstandes kann auch als Erfassungszeitpunkt bezeichnet werden. Ebenso bedeutet auch jeweils ein Erfassen eines zu diesem jeweiligen Erfassen korrespondierenden Zählerstandes, dass der Zählerstand zu dem jeweiligen Erfassungszeitpunt korrespondiert. Dies kann bedeuten, dass der Zählerstand gleichzeitig mit oder unmittelbar nach dem Erfassen ausgelesen wird oder der Zählerstand in einem vorbestimmten festgelegten und konstanten Zeitabstand zu dem Zeitpunkt des Erfassens ausgelesen wird, was beispielsweise durch eine hardware- und/oder elektronikbedingte Latenz bedingt sein kann.

Um eine Anomalieüberwachung und/oder Anomaliedetektion mit möglichst geringem Aufwand und bei möglichst geringen Anforderungen an das Netzwerk zu ermöglichen, ist es erfindungsgemäß vorgesehen, dass eine Auswerteeinrichtung unter vorbestimmten anomaliefreien Bedingungen einen Sollwert zumindest eines netzwerkspezifischen, durch eine physikalische Eigenschaft oder Randbedingung des Netzwerks bedingten Parameters ermittelt. Anschließend wird von der Auswerteeinrichtung aus einer Differenz zwischen dem ausgelesenen Masterzählerstand und einem weiteren Zählerstand ein jeweiliger Istwert des zumindest einen netzwerkspezifischen Parameters ermittelt. Schließlich wird eine Anomalie signalisiert, falls und/oder wenn ein vorbestimmtes Abweichungskriterium zwischen dem Istwert und dem Sollwert erfüllt ist. Es wird hier also durch das Verfahren ermöglicht, eine Quelle des Signals oder der Nachricht in dem Netzwerk durch den charakteristischen Parameter oder ein charakteristisches Muster abzusichern, welches nur durch in dem Netzwerk gegebene physikalische Randbedingungen gegeben oder bedingt ist.

Vorteilhaft kann somit eine Anomalie detektiert werden, ohne dass beispielsweise eine Periodizität der untersuchten oder ausgewerteten Nachrichten oder Signalmerkmale erwartet würde oder notwendig wäre. Weiterhin wird vorteilhaft auch keinerlei Kooperation der Signalquelle, das heißt eines die Nachricht oder das Signal aussendenden Geräts, vorausgesetzt. Das bedeutet, dass vorteilhaft von der oder den sendenden Geräten oder Stationen keine zusätzlichen Informationen, wie etwa ein Zeitstempel, gesendet werden müssen. Da als minimale Voraussetzung zunächst nur das Mastergerät zur Durchführung des Verfahrens ausgestattet oder eingerichtet sein muss, kann das Verfahren vorteilhaft mit geringem Bauteil-, Geräte- und/oder Implementierungsaufwand sowohl bei neu aufzubauenden als auch bei bestehenden Netzwerken angewendet oder eingesetzt werden. Es wird also ein neben der grundlegenden Funktion der Datenübertragung notwendiger Zusatz- oder Mehraufwand klein gehalten, da für typische Netzwerke nicht alle - oftmals sogar eine überwiegende Mehrzahl - der Geräte für die erfolgreiche Anwendung des Verfahrens keinerlei zusätzliche Modifikation benötigen. Da der genutzte Parameter durch die jeweiligen individuellen physikalischen Randbedingungen des Netzwerks bestimmt oder festgelegt ist, ist ein Angriff auf das Netzwerk oder eine Manipulation des Netzwerks und/oder der über das Netzwerk übertragenen Signale, Nachrichten oder Daten nicht oder nur mit erheblichem Aufwand unbemerkt durchführbar. Beispielsweise ist es nicht oder nur mit erheblichem Aufwand möglich, ein Signal derart zu verfälschen, zu manipulieren oder anzupassen, dass dadurch der netzwerkspezifische Parameter und/oder dessen Vorliegen vorgetäuscht würde.

Gemäß dem erfindungsgemäßen Verfahren ist es vorgesehen, dass ein Laufzeitmuster des Signals in dem Netzwerk den zumindest einen netzwerkspezifischen Parameter darstellt. Für die Ermittlung von dessen Istwert ist es dabei vorgesehen, dass eines der Geräte des Netzwerks ein Clientgerät ist, das ebenfalls einen Zähler und eine Triggereinrichtung aufweist. Dabei wird das Signal über das Netzwerk sowohl an das Mastergerät als auch an das Clientgerät übertragen. Weiterhin wird das vorgegebene Signalmerkmal des Signals von der Triggereinrichtung des Clientgeräts erfasst und ein zu einem Zeitpunkt dieses Erfassens korrespondierender Clientzählerstand des Zählers des Clientgeräts wird ausgelesen. Der Istwert des Laufzeitmusters wird dann basierend auf dem Clientzählerstand, der als der weitere Zählerstand zum Ermitteln eines Istwerts des netzwerkspezifischen Parameters dient, ermittelt. Der Clientzählerstand kann beispielsweise separat an das Mastergerät und/oder an die Auswerteeinrichtung übermittelt werden. Das Mastergerät und das Clientgerät sind voneinander getrennte unterschiedliche Geräte, welche an verschiedenen Stellen mit einem Signalübertragungsweg verbunden, das heißt in das Netzwerk eingebunden sind. Durch diese Anordnung wird es vorteilhaft ermöglicht, das Laufzeitmuster zu bestimmen und/oder auszuwerten anhand von relativen Signallaufzeiten und/oder Zählerständen, ohne dass ein Zeitstempel oder eine für das gesamte Netzwerk gültige absolute Uhr notwendig wäre. Das Laufzeitmuster umfasst beispielsweise eine bestimmte Beziehung einer jeweiligen Laufzeit des Signals von der Signalquelle zu dem Mastergerät und zu dem Clientgerät und ist bestimmt durch ein für die Signalübertragung genutztes Ausbreitungsmedium oder Übertragungsmedium und einen räumlichen Abstand oder eine räumliche Lagebeziehung zwischen der Signalquelle, dem Mastergerät und dem Clientgerät, insbesondere durch eine entsprechende Länge der jeweiligen Signalübertragungswege zwischen der Signalquelle, dem Mastergerät und dem Clientgerät. Dabei können auch Verzögerungen oder Latenzen berücksichtigt werden, welche durch jeweilige für einen Signalempfang und/oder eine Signalweiterleitung in dem Netzwerk verwendete Bauteile verursacht werden. Obwohl hier der Clientzählerstand als der weitere Zählerstand bezeichnet wird, können durchaus auch noch zusätzliche oder andere weitere Zählerstände berücksichtigt werden. Ebenfalls stellt das Laufzeitmuster hier lediglich einen netzwerkspezifischen Parameter da und es soll dadurch nicht ausgeschlossen sein, dass weitere netzwerkspezifische Parameter berücksichtigt, bestimmt und/oder ausgewertet werden.

In Ausgestaltung des erfindungsgemäßen Verfahrens ist es vorgesehen, dass von dem Clientgerät ein Referenzsignal an das Mastergerät übermittelt wird, mit oder in dem ein ausgelesener, zu einem Sendezeitpunkt eines vorgegebenen Signalmerkmal des Referenzsignals korrespondierender Referenzclientzählerstand an das Mastergerät übermittelt wird. Das vorgegebene Signalmerkmal des Referenzsignals wird von der Triggereinrichtung des Mastergeräts erfasst und ein zu einem Zeitpunkt dieses Erfassens des vorgegebenen Signalmerkmals des Referenzsignals korrespondierender Referenzmasterzählerstand wird ausgelesen. Zur Ermittlung des Laufzeitmusters werden dann auch der Referenzclientzählerstand und der Referenzmasterzählerstand herangezogen. Das vorgegebene Signalmerkmal des Referenzsignals kann durchaus verschieden sein von dem vorgegebenen Signalmerkmal des an das Mastergerät und an das Clientgerät übertragenen Signals. Vorteilhaft ist hier lediglich eine besondere Ausstattung oder Anpassung von zwei Geräten des Netzwerks, nämlich des Mastergeräts und des Clientgeräts, notwendig. Die übrigen Geräte des Netzwerks müssen hingegen keinerlei besondere Voraussetzungen oder Anforderungen erfüllen. Das Referenzsignal oder eine entsprechende Referenznachricht kann vor oder nach dem an das Mastergerät und an das Client Gerät gesendeten Signal übermittelt oder gesendet werden, wobei das Referenzsignal bevorzugt innerhalb eines vorgegebenen zeitlichen Abstandes zu dem Signal gesendet wird. Beispielsweise kann regelmäßig, insbesondere in vorgegebenen zeitlichen Abständen, ein Referenzsignal von dem Clientgerät an das Mastergerät gesendet werden, wobei die zeitlichen Abstände fest und gleichmäßig oder variabel, dynamisch und/oder situationsangepasst sein können. Ebenso kann nach dem Empfang des Signals das Referenzsignal als Reaktion auf den Empfang des Signals gesendet werden.

In weiterer Ausgestaltung dieser Ausführungsform des erfindungsgemäßen Verfahrens ist es vorgesehen, dass der Istwert das Laufzeitmusters Pat des Signals berechnet wird als

$$Pat = [C_{XM} - C_{XC}] - [C_{RM} - C_{RC}] = [C_{XM} - C_{RM}] - [C_{XC} - C_{RC}].$$

Dabei gibt $C_{XM}$ den zu dem Signalmerkmal korrespondierenden Masterzählerstand. $C_{XC}$ gibt den zu dem Signalmerkmal korrespondierenden Clientzählerstand an, $C_{RM}$ gibt den Referenzmasterzählerstand an und $C_{RC}$ gibt den Referenzclientzählerstand an. Durch diese Festlegung des Laufzeitmusters oder der Berechnung des Laufzeitmusters kann vorteilhaft ein zunächst unbekannter Offset oder Zeitoffset des Clientgeräts oder des Zählers des Clientgeräts gegenüber dem Mastergerät oder dem Zähler des Mastergeräts aus der Berechnung oder Betrachtung eliminiert werden.

Das Laufzeitmuster kann unabhängig von seiner konkreten Berechnung oder Definition für das Signal bestimmt und mit einem unter kontrollierten Bedingungen erhaltenen Sollwert, also mit einem Solllaufzeitmuster verglichen werden. Ebenso ist es möglich, für mehrere oder alle über das Netzwerk übertragenen Signale das jeweilige Laufzeitmuster zu bestimmen und beispielsweise eine zeitliche Entwicklung, eine einsetzende Veränderung, einen Ausreißer oder eine Abweichung gegenüber einem Durchschnittswert oder dergleichen auszuwerten und/oder bei einer Prüfung eines Vorliegens einer Anomalie zu berücksichtigen. Dadurch kann gegebenenfalls eine, beispielsweise durch Alterung bedingt, zeitliche Veränderung oder Drift in das Laufzeitmuster beeinflussenden Eigenschaften des Netzwerks erkannt und eine entsprechende Fehldetektion einer Anomalie vermieden werden.

In weiterer Ausgestaltung des erfindungsgemäßen Verfahrens ist es vorgesehen, dass der Istwert des Laufzeitmusters zusätzlich auch von einem zur Durchführung eigenständiger Berechnungen eingerichteten clientseitigen Teil der Auswerteeinrichtung ermittelt wird. Es wird dann die Anomalie oder ein Vorliegen der Anomalie signalisiert, falls und/oder wenn das Abweichungskriterium zwischen dem jeweiligen ermittelten Istwert und dem Sollwert von der Auswerteeinrichtung und/oder von dem clientseitigen Teil der Auswerteeinrichtung als erfüllt erkannt wird. Mit anderen Worten kann die Auswerteeinrichtung also verteilt angeordnet oder aufgebaut sein und auch aus mehreren Teilen oder Teileinrichtungen bestehen, welche voneinander getrennt oder miteinander verbunden sein können. Ist ein clientseitiger Teil vorgesehen, so werden also zwei unabhängige Berechnungen oder Bestimmungen oder Ermittlungen des Laufzeitmusters vorgenommen. Dies bewirkt vorteilhaft eine zusätzliche Sicherheit oder Absicherung gegen Fehlfunktionen, Angriffe, Manipulationen oder allgemein gegen Anomalien. Der clientseitige Teil der Auswerteeinrichtung kann insbesondere Teil des Clientgerätes sein, wozu beispielsweise eine entsprechende Auswerteschaltung und/oder entsprechende Bausteile in dem Clientgerät angeordnet oder in das Clientgerät integriert sein können. Ein anderer Teil der Auswerteeinrichtung kann beispielsweise als Teil des Mastergerätes in diesem angeordnet oder in dieses integriert oder aber unabhängig von diesem als separate Einrichtung oder als separates Gerät vorgesehen sein. In letzterem Fall sind selbstverständlich für eine jeweilige Datenverarbeitung oder Datenauswertung notwendige Daten, Signale, Zählerstände oder dergleichen jeweils an die Auswerteeinrichtung zu übertragen. Dies kann über das Netzwerk geschehen oder es kann hierfür eine separate Leitung oder Datenverbindung vorgesehen sein, welche beispielsweise ausschließlich diesem Zweck dienen kann. Es kann auch möglich sein, in einem weiteren Schritt zusätzlich die beiden unabhängig voneinander ermittelten Laufzeitmuster miteinander zu vergleichen. Ergibt sich dabei eine Abweichung oder Differenz zwischen den Laufzeitmustern, so kann daraus beispielsweise ein Rückschluss auf einen Ort und/oder eine Art einer Ursache, beispielsweise einer Anomalie, gezogen werden.

In weiterer Ausgestaltung des erfindungsgemäßen Verfahrens ist es vorgesehen, dass der zu dem vorgegebenen Signalmerkmal korrespondierende Masterzählerstand zur Verbesserung der Auflösung oder Messauflösung mittels eines interpolierenden Messverfahrens, insbesondere eines Time-Digital-Conversion Verfahrens und/oder eines Time-to-Digital Konverters oder Wandlers, ermittelt wird. Hierfür kann beispielsweise ein linearer Filter verwendet werden. Der Filter weist dabei bevorzugt eine relativ zu einer verwendeten Taktfrequenz lange Impulsantwort auf. Ein Spitzenwert kann beispielsweise mittels einer Spitzenwert-Halteschaltung gehalten, dann mit einem Analog-Digital-Wandler gewandelt und schließlich ausgewertet werden. Beispielsweise kann hier ein linearer Integrator eingesetzt werden, dessen Integrationsergebnis erfasst und entsprechend in einen Digitalwert gewandelt wird. Durch ein derartiges Verfahren kann besonders vorteilhaft eine Auflösung verbessert werden, ohne dass ein erheblicher Mehraufwand betrieben werden müsste, wie er mit einer alternativ möglichen Erhöhung der Taktfrequenz des Mastergeräts und/oder des Clientgeräts beziehungsweise der jeweiligen Zähler verbunden wäre. Ein entsprechendes interpolierendes Messverfahren kann vorteilhaft beispielsweise auch bei einer Messung von relativen Frequenzabweichungen eingesetzt oder angewendet werden, um die jeweiligen Taktfrequenzen der entsprechenden Geräte nicht unnötig hoch wählen zu müssen.

In weiterer Ausgestaltung des erfindungsgemäßen Verfahrens ist es vorgesehen, dass das Mastergerät eine Auswahllogik umfasst, mittels welcher das Signalmerkmal selbsttätig ausgewählt und/oder vorgegeben wird, insbesondere in Abhängigkeit von einem in dem Netzwerk verwendeten Leitungscode und/oder einer in dem Netzwerk verwendeten Modulationsart. Bei einer Verwendung mehrerer Signalmerkmale können auch mehrere oder alle Signalmerkmale entsprechend selbsttätig ausgewählt und/oder vorgegeben werden. Alternativ ist es auch möglich, dass die Auswahllogik als separates Gerät oder als separate Einrichtung ausgebildet ist und ebenso können die Signalmerkmale auch händisch oder manuell, beispielsweise herstellerseitig oder von einem Nutzer oder Anwender, vorgegeben werden. Vorteilhaft erlaubt eine selbsttätige Auswahl und/oder Vorgabe des Signalmerkmals oder der Signalmerkmalen eine flexible Anwendung des Verfahrens in unterschiedlichen Situationen und/oder Netzwerken ohne zusätzlichen Aufwand. Durch die selbsttätige Auswahl und Vorgabe findet also eine automatische Anpassung der verwendeten Signalmerkmale, beispielsweise an den jeweiligen Leitungscode und/oder die jeweilige Modulationsart oder dergleichen statt.

Ein vorgegebenes Signalmerkmal kann beispielsweise eine bestimmte steigende oder fallende Signalflanke sein, welche beispielsweise durch eine bestimmte vorgegebene Höhe, Steigung, Merkmalssequenz und/oder etwa durch einen bestimmten vorgegebenen zeitlichen Abstand von einem Beginn des Signals definiert, bezeichnet oder identifiziert sein kann. Anstelle einer Signalflanke kann beispielsweise auch ein Amplitudenübergang bei NRZ-Leitungskodierung (Non Return to Zero) oder ein Phasenübergang bei Pulsamplitudenmodulation (PAM) vorgesehen sein.

In jedem Fall ist es selbstverständlich vorgesehen, dass selbsttätig oder automatisch oder automatisiert eine Zuordnung zwischen jeweiligen Zählerständen, Signalmerkmalen und/oder Signalen erfolgt oder stattfindet, sodass beispielsweise bei mehreren aufeinanderfolgenden Signalen und/oder mehrfacher aufeinanderfolgender Anwendung des erfindungsgemäßen Verfahrens in demselben Netzwerk zu jedem Zeitpunkt, insbesondere bei den jeweiligen Auswertungen, Eindeutigkeit gegeben ist.

Das erfindungsgemäße Verfahren kann in unterschiedlichen Netzwerken, Netzwerkkarten, Netzwerktypen oder Netzwerkarchitekturen angewendet werden, welche auch unterschiedliche Protokolle einsetzen oder nutzen können und welche auch in unterschiedlichen Anwendungsbereichen eingesetzt werden können. Beispielsweise ist eine Anwendung in einem Gebäudenetzwerk ebenso möglich, wie eine Anwendung in einem Fahrzeugnetzwerk. Insbesondere in letzterem Fall können die Geräte des Netzwerks beispielsweise Steuergeräte des Fahrzeugs sein, welche über einen Bus, beispielsweise einen CAN-Bus einander verbunden oder verknüpft sind.

Im Folgenden ist ein Ausführungsbeispiel der Erfindung beschrieben. Hierzu zeigt:

Fig. 1 eine schematische Darstellung eines Netzwerks mit einem Mastergerät, einem Clientgerät und zwei weiteren Geräten;

Fig. 2 eine schematische Darstellung eines anderen Netzwerks mit einem Mastergerät und drei weiteren Geräten;

Fig. 3 einen schematischen Ablaufplan einer Ausführungsform des erfindungsgemäßen Verfahrens.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

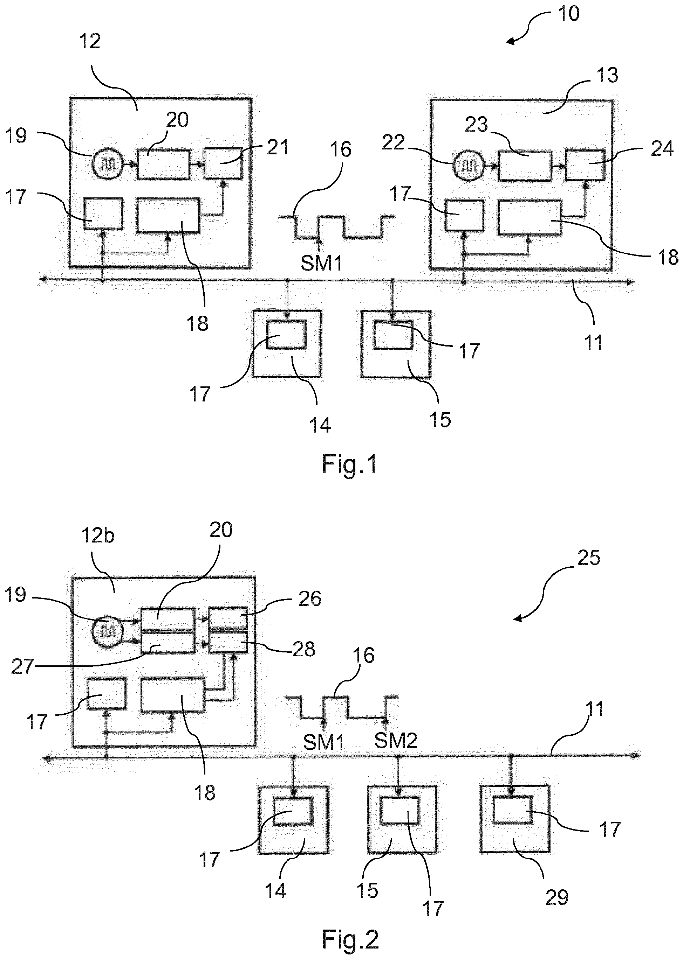

Fig. 1 zeigt eine schematische Darstellung eines ersten Netzwerks 10, welches aufgebaut ist aus einem Bus 11, einem Mastergerät 12, einem Clientgerät 13, einem ersten Gerät 14 und einem zweiten Gerät 15. Der Bus 11 dient als Signalübertragungsweg, über welchen Signale, Daten, Informationen und/oder Nachrichten zwischen den Geräten 12 bis 15 ausgetauscht werden können. Der Bus 11 kann beispielsweise eine übliche zur Datenübertragung geeignete elektrische Leitung oder Verbindung sein. Die Geräte 12 bis 15 sind über entsprechende Anschlüsse und/oder Anschlussleitungen mit dem Bus 11 verbunden. Zusätzlich schematisch dargestellt ist ein Signal 16, welches hier beispielhaft aus einer Folge von fallenden und steigenden Flanken zusammengesetzt ist, welche durch konstante Abschnitte mit jeweils einem von zwei unterschiedlichen Konstanten Signal- oder Spannungsniveaus miteinander verbunden sind. Vorliegend ist eine steigende Flanke als ein erstes Signalmerkmal SM1 besonders gekennzeichnet. Auf dieses erste Signalmerkmal SM1 beziehungsweise dessen Verwendung oder Signifikanz wird weiter unten noch näher eingegangen.

Das erste Netzwerk 10 kann beispielsweise Teil eines Kraftfahrzeugs sein, wobei dann die Geräte 12 bis 15 beispielsweise Steuergeräte und der Bus 11 ein CAN-Bus sein können. Dies ist jedoch nur ein Beispiel oder Anwendungsfall und das erste Netzwerk 10 könnte auch eine andere Struktur oder Architektur sowie eine Vielzahl weiterer Geräte aufweisen und es könnte außer einem CAN-Bus beispielsweise auch FlexRay, Ethernet, ein MOST-Bus oder dergleichen eingesetzt werden.

Vorliegend sind alle Geräte 12 bis 15 des ersten Netzwerks 10 mit einer Schnittstelle 17 ausgestattet, über welche ein Signal- oder Datenaustausch über den Bus 11 erfolgt. Das Mastergerät 12 und das Clientgerät 13 weisen zusätzlich jeweils eine Auswahllogik 18 auf, welche so verschaltet ist, dass sie an dem jeweiligen Gerät 12 beziehungsweise 13 ankommende Signale empfängt. Die Auswahllogik 18 ist dazu eingerichtet zumindest ein Signalmerkmal SM1, bevorzugt mehrere, beispielsweise auch unterschiedliche, Signalmerkmale SM1, SM2 (vergleiche Fig. 2) zu erkennen. Auch umfasst die Auswahllogik 18 eine Triggereinrichtung, mittels welcher bei einem solchen Erkennen eines bestimmten Signalmerkmals SM1 eine weitere Aktion ausgeführt oder veranlasst werden kann. Die Auswahllogik 18 ist weiterhin dazu eingerichtet, selbsttätig ein bestimmtes Signalmerkmal SM1 auszuwählen, was beispielsweise anhand von oder basierend auf einem in dem ersten Netzwerk 10 verwendeten Leitungscode, einer in dem ersten Netzwerk 10 verwendeten Modulationsart oder dergleichen geschehen kann. Vorliegend ist die Auswahllogik 18 dazu eingerichtet das erste Signalmerkmal SM1 zu erkennen und/oder auf das erste Signalmerkmal SM1 anzusprechen. Es kann dabei auch vorgesehen sein, dass bereits vorgegeben ist, auf welches Signalmerkmal SM1 die Auswahllogik 18 ansprechen soll. Es kann vorgesehen sein, dass ein selbsttätiges Auswählen eines Signalmerkmals SM1 durch die Auswahllogik 18 beispielsweise bei einem Wechsel des verwendeten Leitungscodes, der verwendeten Modulationsart oder dergleichen erfolgt.

Das Mastergerät 12 weist vorliegend einen Mastertaktgeber 19 auf, welcher mit einer regelmäßigen und gleichmäßigen lokalen Masterfrequenz $f_{CLM}$ läuft oder betrieben wird oder diese Masterfrequenz $f_{CLM}$ vorgibt, welche unabhängig sein kann von einer auf dem Bus 11 verwendeten Netztaktfrequenz. Mit dem Mastertaktgeber 19 verbunden ist ein Masterzähler 20, welcher ebenfalls Teil des Mastergeräts 12 ist. Aus dem Masterzähler 20 kann ein Masterzählerstand ausgelesen und in einem Masterregister 21 des Mastergeräts 12 gespeichert, zwischengespeichert oder abgelegt werden. Hier sind die einzelnen Komponenten oder Bauteile des Mastergeräts 12 so verschaltet, dass dieses Auslesen und Abspeichern des Masterzählerstands durch die Auswahllogik 18, insbesondere durch die von dieser umfasste Triggereinrichtung, veranlasst wird oder werden kann, wenn beispielsweise das erste Signalmerkmal SM1 von der Auswahllogik 18 bei oder an oder in einem das Mastergerät 12 über den Bus 11 erreichenden Signal 16 erfasst oder erkannt wird. Das Mastergerät 12 kann auch weitere, hier nicht dargestellte Komponenten, Bauteile und/oder Schaltungen umfassen, wozu insbesondere eine Auswerteeinrichtung gehört, welche auch Zugriff auf das Masterregister 21 und gegebenenfalls weitere Register oder Speicher haben kann. Aus einem Zähler ausgelesene und in einem Register gespeicherte Zählerstände können auch als Capture-Werte bezeichnet werden.

Das Clientgerät 13 umfasst einen Clienttaktgeber 22, welcher mit einer lokalen Clientfrequenz $f_{CLC}$ betrieben wird oder diese Clientfrequenz $f_{CLC}$ vorgibt, welche unabhängig sein kann sowohl von der auf dem Bus 11 verwendeten Netztaktfrequenz als auch von der Masterfrequenz $F_{CLM}$. Analog zum Aufbau des Mastergeräts weist das Clientgerät 13 weiterhin einen mit dem Clienttaktgeber 22 verbundenen Clientzähler 23 auf, von oder aus dem ein Clientzählerstand ausgelesen und in einem Clientregister 24 gespeichert, zwischengespeichert oder abgelegt werden kann.

Damit weisen also sowohl das Mastergerät 12 als auch das Clientgerät 13 besondere und spezifische Ausstattungsmerkmale auf. Das erste Gerät 14 und das zweite Gerät 15 hingegen brauchen lediglich eine in jedem üblichen netzwerkfähigen Gerät vorzufindende Basis- oder Grundausstattung an Komponenten und Fähigkeiten aufzuweisen.

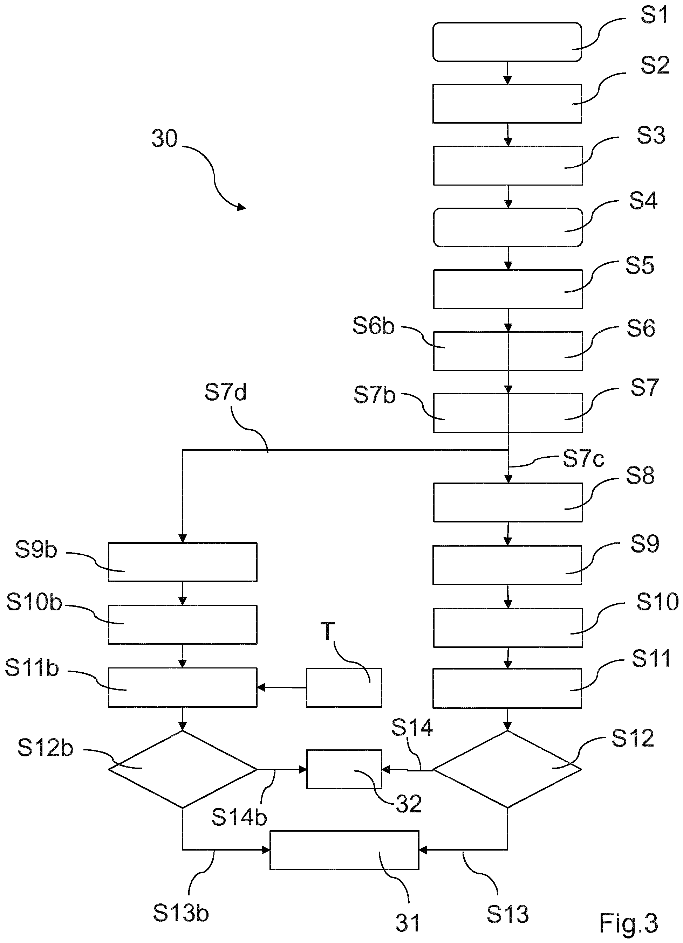

Die in Fig. 1 schematisch dargestellte Anordnung erlaubt es, das erste Netzwerk 10 auf Anomalien zu überwachen, wofür vorliegend ein netzwerkspezifischer Parameter herangezogen wird, bei dem es sich hier insbesondere um ein Laufzeitmuster des Signals 16 auf dem Bus 11 in dem ersten Netzwerk 10 handeln kann. Das Verfahren zur Anomaliedetektion wird unter Rückbezug auf die hier im Zusammenhang mit der Fig. 1 beschriebenen Bauteile und Anordnungen weiter unten anhand von Fig. 3 näher beschrieben.

Fig. 2 zeigt eine schematische Darstellung eines zweiten Netzwerks 25, welches ebenfalls einen Bus 11 umfasst, mit dem hier jedoch ein alternativ ausgeführtes Mastergerät 12b und anstelle des Clientgeräts 13 ein drittes Gerät 29 verbunden sind. Die hier ebenfalls vorgesehenen Geräte 14 und 15 können denjenigen aus Fig. 1 entsprechen. Derart aufgebaut kann auch das dritte Gerät 29 sein, welches also ebenfalls über keine besonderen, über eine Basis- oder Grundausstattung hinausgehende Merkmale oder Einrichtungen aufweisen muss. Zudem können auch in das zweite Netzwerk 25 weitere, hier nicht dargestellte Geräte eingebunden sein.

Das Mastergerät 12b umfasst im Wesentlichen die gleichen Komponenten wie das Mastergerät 12, wobei hier jedoch mit dem Mastertaktgeber 19 zusätzlich zu dem Masterzähler 20 ein zweiter Masterzähler 27 verbunden ist. Zudem wird hier der Zählerstand des Masterzählers 20 in ein zweites Masterregister 26 ausgelesen und ein zweiter Masterzählerstand des zweiten Masterzählers 27 wird in ein drittes Masterregister 28 ausgelesen oder gespeichert. Das Auslesen der jeweiligen Zählerstände des Masterzählers 20 und des zweiten Masterzählers 27 kann hier ebenfalls durch die Auswahllogik 18 des Mastergeräts 12b veranlasst werden. Zusätzlich ist auch hier schematisch das Signal 16 dargestellt, wobei jedoch zusätzlich zu dem ersten Signalmerkmal SM1 ein zweites Signalmerkmal SM2 gekennzeichnet ist. Dabei ist es vorgesehen, dass - wenn das Signal 16 über den Bus 11 an das Mastergerät 12b gesendet und von diesem empfangen wird - bei dem Erfassen des ersten Signalmerkmals SM1 durch die Auswahllogik 18 der Masterzählerstand des Masterzählers 20 in das zweite Masterregister 26 ausgelesen wird. Analog wird bei einem Erfassen des zweiten Signalmerkmals SM2 durch die Auswahllogik 18 der zweite Masterzählerstand des zweiten Masterzählers 27 in das dritte Masterregister 28 ausgelesen, das heißt aus dem zweiten Masterzähler 27 ausgelesen und in dem dritten Masterregister 28 gespeichert.

Mittels dieser in Zusammenhang mit Fig. 2 beschriebenen Anordnung und Verschaltung ist es ebenfalls möglich, das zweite Netzwerk 25 auf Anomalien zu überwachen. Dabei ist hier nur das Mastergerät 12b mit über eine Grundausstattung hinausgehenden Merkmalen oder Einrichtungen ausgestattet. Vor diesem Hintergrund ist es hier vorgesehen, dass bei einer Anordnung gemäß Fig. 2 die Anomalieüberwachung oder Anomaliedetektion auf Basis einer Auswertung eines Frequenzmusters erfolgt. Auch dieses Vorgehen wird weiter unten anhand von Fig. 3 näher erläutert.

Es sei jedoch bereits an dieser Stelle darauf hingewiesen, dass die hier dargestellte Verwendung zweier Masterzähler 20, 27 in dem Mastergerät 12b lediglich eine Ausführungsvariante darstellt. Alternativ ist es auch möglich, beispielsweise das dritte Masterregister 28 ebenfalls mit dem Masterzähler 20 zu verbinden, sodass als zweiter Masterzählerstand, welcher in dieses dritte Masterregister 28 bei einer Detektion des zweiten. Signalmerkmals SM2 ausgelesen wird, der zu diesem Zeitpunkt dann vorliegende Zählerstand des Masterzählers 20 verwendet wird. Voraussetzung ist dabei allerdings, dass der Masterzähler 20 freilaufend ist und das Auslesen und Speichern der jeweiligen Masterzählerstände keinen Einfluss, insbesondere keine zeitliche Verzögerung auf den Masterzähler 20 beziehungsweise den jeweiligen Masterzählerstand hat oder ausübt.

Fig. 3 zeigt einen schematischen Ablaufplan 30 anhand dessen im Folgenden ein Verfahren zur Anomaliedetektion in dem ersten Netzwerk 10 beschrieben werden soll. Dabei werden beide der im Zusammenhang mit Fig. 1 und Fig. 2 beziehungsweise mit dem ersten Netzwerk 10 und dem zweiten Netzwerk 25 beschriebenen Methoden kombiniert. Das heißt, es wird sowohl ein Laufzeitmuster als auch ein Frequenzmuster ausgewertet, um eine verbesserte Genauigkeit, Zuverlässigkeit und Sicherheit bei der Anomaliedetektion und bei der Anomalieüberwachung insgesamt zu erzielen.

Zu einem Start S1 des Verfahrens sei angenommen, dass das erste Netzwerk 10 auf Hardwareebene vollständig aufgebaut und eingerichtet sei. Es sind insbesondere auch bereits die Taktgeber 19, 22 aktiv und die Zähler 20, 23 können bereits laufen oder in Betrieb sein.

In einem Verfahrensschritt S2 erfolgt zunächst unter vorbestimmten oder kontrollierten Bedingungen, das heißt beispielsweise unter Aufsicht unmittelbar nach dem Aufbau oder der Einrichtung des ersten Netzwerks 10, eine Ermittlung jeweiliger Sollwerte der im Weiteren verwendeten netzwerkspezifischen Parameter. Dazu kann beispielsweise das Signal 16 von allen anderen Geräten 13, 14, 15 an das Mastergerät 12 und zusätzlich von dem ersten Gerät 14 und dem zweiten Gerät 15 an das Clientgerät 13 gesendet werden. Weiterhin kann zusätzlich auch ein weiteres Signal von dem Clientgerät 13 an das Mastergerät 12 gesendet werden. In dieser Betriebsphase können auch weitere Signale gesendet und/oder das Signal 16 mehrfach gesendet werden, sodass eine ausreichende Datenbasis zur Ermittlung der Sollwerte zur Verfügung steht. Zur Ermittlung der Sollwerte kann das nachfolgend beschriebene Verfahren ganz oder teilweise durchlaufen werden, wobei dabei ermittelte Werte als Sollwerte angesehen und verwendet werden können.

Zu diesem Zeitpunkt wird davon ausgegangen, dass keine Anomalie vorliegt, so dass die anhand dieser unter bekannten, überwachten Bedingungen übermittelten Signale und deren Eigenschaften sowie beispielsweise jeweils zugehörige Zählerstände als anomaliefreie Soll- oder Normalwerte angenommen und verwendet und in einem Verfahrensschritt S3 in der Auswerteeinrichtung als Vergleichswerte abgespeichert werden.

Sobald jeweilige Sollwerte der netzwerkspezifischen Parameter für alle Geräte 12 bis 15 des ersten Netzwerks 10 und/oder alle Gerätepaarungen ermittelt und abgespeichert sind, sind also die netzwerkspezifischen Parameter beziehungsweise deren Sollwerte angelernt oder, anders ausgedrückt, ist die Auswerteeinrichtung mit den Parametern oder Sollwerten angelernt. Es ist damit also ein Sollzustand des ersten Netzwerks 10 ohne Anomalien bekannt.

Nachdem diese Anlernphase beendet ist, wird anschließend in einem Verfahrensschritt S4 ein regulärer Betrieb oder Normalbetrieb des ersten Netzwerks 10 aufgenommen. In diesem Normalbetrieb sind keine zusätzlichen externen Überwachungsmaßnahmen und keine Aufsicht mehr notwendig, da eventuell auftretende Anomalien durch die weiteren Verfahrensschritte automatisiert erkannt werden können.

Für das vorliegende Beispiel sei angenommen, dass in einem Verfahrensschritt S5 das erste Gerät 14 das Signal 16 über den Bus an alle mit dem Bus 11 verbundenen Einrichtungen und damit insbesondere sowohl an das Mastergerät 12 als auch an das Clientgerät 13 aussendet. Mit dem Signal 16 wird dabei eine Nachricht X übertragen, wobei die Begriffe "Signal" und "Nachricht" im Folgenden auch austauschbar verwendet werden.

In den Verfahrensschritten S6 und S6b erfolgt die Auswahl und Vorgabe des ersten Signalmerkmals SM1 des Signals 16 durch die Auswahllogiken 18 des Clientgeräts 13 und des Mastergeräts 12. Durch das Mastergerät 12 wird zusätzlich das zweite Signalmerkmal SM2 ausgewählt und vorgegeben. Die Signalmerkmale SM1, SM2 können aber auch bereits zu einem vorherigen Zeitpunkt, insbesondere vor dem Aussenden des Signals 16 stattgefunden haben oder vorgesehen sein.

In einem nachfolgenden Verfahrensschritt S7 wird, veranlasst durch die Triggereinrichtung des Clientgeräts 13, auf das Erfassen oder Erkennen des ersten Signalmerkmals SM1 - oder dessen Eintreffen an dem Clientgerät 13 - hin der zu diesem Eintreffen, das heißt zu einem Eintreffzeitpunkt des ersten Signalmerkmals SM1 der Nachricht X korrespondierende Clientzählerstand $C_{XC}$ des Clientzählers 23 ausgelesen und in dem Clientregister 24 abgelegt. Parallel wird, sobald das Signal 16, genauer gesagt das ersten Signalmerkmal SM1, das Mastergerät 12 erreicht hat, in einem Verfahrensschritt S7b - veranlasst durch die Triggereinrichtung des Mastergeräts 12 - der erste Masterzählerstand $C_{XM}$ des Masterzählers 20 ausgelesen und in dem ersten Masterregister 21 gespeichert. Dieser erste Masterzählerstand $C_{XM}$ korrespondiert also zu einem Eintreffzeitpunkt des ersten Signalmerkmals SM1 an dem Mastergerät 12. Der erste Masterzählerstand $C_{XM}$ kann parallel oder anschließend auch in dem zweiten Masterregister 26 als $C_{XM1}$ gespeichert. Alternativ kann auch sichergestellt werden, dass der Wert $C_{XM}$ auch zu einem späteren Zeitpunkt in dem ersten Masterregister 21 für die weiter unten beschriebene Frequenzmusterauswertung zur Verfügung steht.

An dieser Stelle folgt das Verfahren parallel zwei Pfaden S7c und S7d, welche im Folgenden nacheinander beschrieben werden sollen. Der Pfad S7c korrespondiert dabei mit der Verwendung oder Auswertung eines Laufzeitmusters, während der Fahrt S7d mit der Verwertung oder Auswertung eines Frequenzmusters korrespondiert.

Dem Pfad S7c folgend wird in einem nachfolgenden Schritt S8, nachdem das Signal 16 vollständig den Bus 11 durchgelaufen ist, von dem Clientgerät S13 der Clientzählerstand $C_{XC}$ in einem separaten Signal oder einer separaten Nachricht über den Bus 11 an das Mastergerät 12 übermittelt. Von oder in dem Mastergerät 12 wird der empfangene Clientzählerstand $C_{XC}$ der Auswerteeinrichtung zugeleitet oder verfügbar gemacht.

In einem Verfahrensschritt S9 sendet das Clientgerät 13 eine Referenznachricht R oder ein entsprechendes Referenzsignal über den Bus 11 an das Mastergerät 12. In der Referenznachricht R enthalten ist als Information ein Referenzclientzählerstand $C_{RC}$, welcher mit einem Signalmerkmal der Referenznachricht R korrespondiert. Mit anderen Worten kann der Referenzclientzählerstand $C_{RC}$ beispielsweise in einem festen, vorgegebenen oder bekannten Zeitabstand zu einem Zeitpunkt ausgelesen worden sein, zu dem das Signalmerkmal der Referenznachricht R von dem Clientgerät 13 generiert und/oder ausgesendet wird.

In einem Verfahrensschritt S10 wird die Referenznachricht R von dem Mastergerät 12 empfangen und das Signalmerkmal der Referenznachricht R erkannt oder erfasst. Weiterhin wird, veranlasst durch die Triggereinrichtung des Mastergeräts 12, der zu diesem Erkennen oder Erfassen des Signalmerkmals der Referenznachricht R korrespondierende Referenzmasterzählerstand $C_{RM}$ aus dem Masterzähler 20 ausgelesen. Der mit der Referenznachricht R an das Mastergerät 12 übermittelte Clientreferenzzählerstand $C_{RC}$ und der Masterreferenzzählerstand $C_{RM}$ werden ebenfalls der Auswerteeinrichtung übermittelt oder verfügbar gemacht.

Eine Laufzeit des Signals 16 von dem ersten Gerät 14 zu dem Mastergerät 12 und zu dem Clientgerät 13 sowie eine Laufzeit der Referenznachricht R von dem Clientgerät 13 zu dem Mastergerät 12 ist durch physikalische Randbedingungen, insbesondere eine Leitungslänge und eine Ausbreitungskonstante für elektromagnetische Wellen auf elektrischen Leitungen - konkret auf dem Bus 11 - gegeben und in Verbindung mit der konkreten räumlichen Anordnung der Geräte 12 bis 15 und des Busses 11 somit charakteristisch für ein bestimmtes Netzwerk, hier für das erste Netzwerk 10. Die Ausbreitungskonstante kann beispielsweise 5 ns pro Meter betragen. Damit beträgt eine reine Laufzeit oder Signallaufzeit des Signals 16 auf dem Bus 11 bei 5 m Leitungslänge etwa 25 ns. Zusätzlich können sich noch Verzögerungszeiten oder Latenzen durch eine jeweilige Empfangselektronik ergeben. Diese Verzögerungszeiten können in der gleichen Größenordnung liegen und beispielsweise ebenfalls 25 ns betragen. Es folgt also, dass sich für das Signal 16 unterschiedliche Laufzeiten ergeben, je nachdem, ob es von dem ersten Gerät 14 gesendet wurde wie vorgegeben und erwartet oder ob es tatsächlich von einem anderen Gerät, beispielsweise von dem zweiten Gerät 15 oder einem Fremdgerät gesendet wurde. Eine Laufzeitdifferenz

$$\Delta T_X \;=\; T_{QM} \;-\; T_{QC} \quad (1)$$

ist also immer gleich oder konstant für jede Nachricht X oder jedes sonstige Signal, welches tatsächlich von ein und derselben Signalquelle Q, beispielsweise hier von dem ersten Gerät 14, ausgesendet wurde. $T_{QM}$ gibt dabei die Laufzeit von der Signalquelle Q zu dem Mastergerät 12 und $T_{QC}$ die Laufzeit von der Signalquelle Q zu dem Clientgerät 13 an. Die Laufzeitdifferenz $\Delta T_X$ kann für jede einzelne Nachricht und für jedes einzelne Signal ermittelt werden, welches in dem ersten Netzwerk 10 gesendet wird.

Die Laufzeitdifferenz ist $\Delta T_X$ aufgrund der festen räumlichen Positionen und Relationen in dem ersten Netzwerk 10 gerätespezifisch. Sie kann also als eine Art Authentifizierung der jeweiligen Signalquelle Q dienen und in einer sicherheitskritischen Situation - beispielsweise bei einem Angriff oder einer Manipulation des ersten Netzwerks 10 - würde beispielsweise ein Fremdgerät eine Nachricht Y senden, welche vorgeblich von dem ersten Gerät 14 stammt. Bei Verwendung eines CAN-Busses 11 könnte beispielsweise das Fremdgerät einen CAN-Identifier verwenden, welcher bestimmungsgemäß ausschließlich dem ersten Gerät 14 zugeordnet ist. In einem herkömmlichen Netzwerk könnte diese missbräuchliche Verwendung des CAN-Identifiers nicht erkannt werden. Eine solche Situation kann auch entstehen, wenn ein Gerät, hier beispielsweise das zweite Gerät 15 manipuliert wurde. Prinzipiell kann diese sicherheitskritische, anormale Situation vorliegend dadurch erkannt werden, dass die Laufzeitdifferenz $\Delta T_Y$ der gefälschten oder manipulierten, durch das Fremdgerät gesendeten Nachricht Y sich ergibt zu:

$$\Delta T_Y \;=\; T_{YM} \;-\; T_{YC} \quad (2)$$

Aufgrund der unterschiedlichen räumlichen Positionen und damit der unterschiedlichen Laufzeiten für von dem ersten Gerät 14 und von dem Fremdgerät ausgesendeten Nachrichten oder Signalen kann eine Abweichung der tatsächlichen Laufzeitdifferenz $\Delta T_Y$ von einer erwarteten Laufzeitdifferenz erkannt und als Anomalie in dem ersten Netzwerk 10 gewertet oder erkannt werden.

Grundsätzlich müssen dabei die jeweiligen Laufzeitdifferenzen $\Delta T_X$, $\Delta T_Y$ mit einer hinreichend guten Auflösung gemessen oder bestimmt werden. Diese Auflösung muss im hier beschriebenen Beispiel etwa einige Nanosekunden betragen.

Durch die Auswahllogiken 18 kann beispielsweise als erstes Signalmerkmal SM1 eine bestimmte Signalflanke des Signals 16 oder der Nachricht X oder der Nachricht Y, beispielsweise eine erste auf eine Startflanke folgende Flanke, ermittelt oder bestimmt werden. Die in den Verfahrensschritten S7, S7b erfassten Zählerstände $C_{XM}$ und $C_{XC}$ der mit der Frequenz $f_{CLM}$ beziehungsweise $f_{CLC}$ betriebenen oder versorgten Zähler 20, 23 können beispielsweise dann erfasst oder festgehalten werden, wenn diese festgelegte Flanke, das heißt also das erste Signalmerkmal SM1, an einem Ausgang der jeweiligen Auswahllogik 18 auftritt oder anliegt. Damit wird der jeweilige Eintreffzeitpunkt des ersten Signalmerkmals SM1 an dem Mastergerät 12 also relativ zu dem lokalen Takt des Mastertaktgebers 19 und der Zeitpunkt des Eintreffens des ersten Signalmerkmals SM1 an dem Clientgerät 13 relativ zu dem lokalen Takt des Clienttaktgebers 23 bestimmt.

Diese jeweiligen Eintreffzeitpunkte oder Eintreffzeiten des ersten Signalmerkmals SM1 beim Mastergerät 12 beziehungsweise beim Clientgerät 13 können als $t_{XM}$ beziehungsweise als $t_{XC}$ bezeichnet und durch ganzzeilige Vielfache der jeweiligen Zählerstände $C_X$ beziehungsweise $C_{XC}$ ausgedrückt werden:

$$t_{XM} = C_{XM} / f_{CLM} \qquad und \qquad t_{XC} = (C_{XC} / f_{CLC}) + t_{off} \qquad (3)$$

Dabei kann ein Zeitbezug t=0 für einen Masterzählerstand von Null festgesetzt werden. Bei dem Clientgerät 13 muss dann jedoch von einem zunächst unbekannten Zeitoffset $t_{off}$ ausgegangen werden. Aus einer Kombination der Laufzeitdifferenz $\Delta T_X$ für die Nachricht X und den Eintreffzeitpunkten $t_{XM}$ und $t_{XC}$ kann die Beziehung

$$\Delta T_X = t_{XM} - t_{XC} = (C_{XM} / f_{CLM}) - (C_{XC} / f_{CLC}) - t_{off} \qquad (4)$$

gewonnen werden. Die lokale Taktfrequenz $f_{CLC}$ des Clienttaktgebers 22 kann durch eine relative Frequenzabweichung $\Delta f_{rel}$ von der lokalen Taktfrequenz $f_{CLM}$ des Mastertaktgebers 19 ausgedrückt werden:

$$f_{CLC} = f_{CLM} (1 + \Delta f_{rel}) \approx f_{CLC}$$

In der Praxis kann die relative Frequenzabweichung $\Delta f_{rel}$ klein sein und beispielsweise bei einer Verwendung von Quarzoszillatoren oder Schwingquarzen $\Delta f_{rel} \approx 10^{-5}$ betragen. Damit kann die Zeitdifferenz (4) bis auf den Zeitoffset $t_{off}$ aus dem Masterzählerstand und $C_X$ und dem Clientzählerstand $C_{XC}$ bestimmt werden.

Aus dem mit der Referenznachricht R übermittelten Clientreferenzzählerstand $C_{RC}$ kann als Referenz eine Zeitdifferenz

$$\Delta T_R = t_{RM} - t_{RC} = (C_{RM} / f_{CLC}) - (C_{RC} / f_{CLC}) - t_{off} \qquad (5)$$

ermittelt werden. Diese Zeitdifferenz (5) enthält den Zeitoffset $t_{off}$ gleichermaßen, jedoch mit einer bekannten Laufzeitdifferenz, welche vom physikalischen Abstand zwischen dem Clientgerät 13 und dem Mastergerät 12 abhängt. Dieser Abstand ist für das erste Netzwerk 10 bekannt.

Mit den nunmehr bekannten Daten kann in einem nachfolgenden Verfahrensschritt S11 ein Laufzeitmuster Pat(X) für die Nachricht X berechnet werden. Vorliegend wird dazu eine Differenz zwischen der Beziehung (4) und der Zeitdifferenz (5) gebildet, wodurch der unbekannte Zeitoffset $t_{off}$ aus der Berechnung eliminiert werden kann. Es ergibt sich also das Laufzeitmuster

$$Pat(X) = f_{CLC} \cdot (\Delta T_X - \Delta T_R) = (C_{XM} - C_{XC}) - (C_{RM} - C_{RC})$$
$$= (C_{XM} - C_{RM}) - (C_{XC} - C_{RC}) \quad (6)$$

Das somit für die Nachricht X berechnete Laufzeitmuster Pat(X) kann in einem Verfahrensschritt S12 nachfolgend mit dem erwarteten, im Verfahrensschritt S2 ermittelten Sollwert oder Solllaufzeitmuster verglichen werden. Dabei kann ein Schwellwert für eine Abweichung zwischen dem Laufzeitmuster Pat(X) der Nachricht X und dem als Sollwert gespeicherten Laufzeitmuster vorgegeben sein. Eine Anomalie in dem ersten Netzwerk 10 wird in diesem Fall dann erkannt, wenn diese Abweichung den vorgegebenen Schwellwert erreicht oder überschreitet.

Der Schwellwert kann beispielsweise gewonnen oder bestimmt werden, in dem ein plausibler Wert für das Laufzeitmuster Pat(X) anhand von herstellerseitigen Hardwarespezifikationen der für das erste Netzwerk 10 verwendeten Geräte ermittelt und dieser plausible Wert um 10 % erhöht wird. Da die Abweichung sowohl nach oben als auch nach unten hin erfolgen kann, ist es vorliegend vorgesehen, dass ein Betrag der Differenz zwischen dem Laufzeitmuster Pat(X) und dem entsprechenden Sollwert gebildet und dieser Betrag mit dem Schwellwert verglichen wird.

Wird keine Anomalie detektiert, das heißt ist der Betrag der Abweichung kleiner als der Schwellwert, so wird in einem Verfahrensschritt S13 ein Normalbetrieb 31 des ersten Netzwerks 10 aufgenommen oder fortgesetzt. Dieser Normalbetrieb 31 zeichnet sich durch die fortgeführte bestimmungsgemäße Funktion und Funktionsausführung in dem ersten Netzwerk 10 und allen angeschlossenen oder beteiligten Geräten 12 bis 15 aus.

Wird jedoch eine Anomalie detektiert da der Betrag der Abweichung größer als der Schwellwert ist, so wird in einem Verfahrensschritt S14 in einen Anomaliebetrieb 32 übergegangen. In dem Anomaliebetrieb 32 kann beispielsweise das Vorliegen einer Anomalie signalisiert werden. Dies kann beispielsweise auf akustischem, optischem und/oder elektronischem oder elektrischem Weg geschehen, indem beispielsweise ein entsprechendes Alarmsignal von der Auswerteeinrichtung, welche die Anomalie detektiert hat, ausgegeben wird. Es ist auch möglich, vorzusehen, bei der Detektion der Anomalie die Signal- oder Datenübertragung in dem ersten Netzwerk 10 ganz oder teilweise zu unterbrechen.

Um eine hinreichende Auflösung bei der Ermittlung der jeweiligen Laufzeitmuster zu erhalten, sollte eine minimale Laufzeit oder ein minimaler Abstand zwischen zwei Geräten 12 bis 15 in dem ersten Netzwerk 10 zu einem mit den jeweils verwendeten Bauteilen und Schaltungen, insbesondere mit der jeweils verwendeten Auswerteeinrichtung, zuverlässig unterscheidbaren Laufzeitmuster führen. Beispielsweise kann in dem lokalen ersten Netzwerk 10 ein minimaler Abstand zwischen zwei Geräten 12 bis 15 von 50 cm vorgesehen sein, was einer Laufzeit oder Signallaufzeit von etwa 2,5 ns entspricht und bei einer verwendeten lokalen Taktfrequenz $f_{CLM}$ beziehungsweise $f_{CLC}$ des Mastertaktgebers 19 beziehungsweise des Clienttaktgebers 22 von 400 MHz kann somit gerade ein Abstand von 50 cm aufgelöst werden.

Um diese Auflösung zu verbessern, können die lokalen Taktfrequenzen $f_{CLM}$, $f_{CLC}$ der Taktgeber 19, 22 erhöht werden.

Eine Alternative, welche in der Regel mit geringerem Aufwand verbunden ist, kann darin bestehen, ein interpolierendes Messverfahren einzusetzen. Hierfür kann beispielsweise in dem Clientgerät 13 und in dem Mastergerät 12 jeweils ein linearer Integrator vorgesehen sein, dessen Integrationsergebnis mit einem ebenfalls dort vorgesehenen Analog-Digital-Wandler gewandelt wird. Allgemein kann hier auf ein bekanntes Time-Digital-Konversionsverfahren zurückgegriffen werden. Mit einem solchen Vorgehen kann die erreichbare Auflösung beispielsweise um bis zu einem Faktor 1000 unter einer Periodendauer der lokalen Taktfrequenzen $F_{CLM}$ und $f_{CLC}$ liegen. Es kann also beispielsweise mit einer lokalen Taktfrequenz $f_{CLM}$, $F_{CLC}$ der Taktgeber 19, 22 eine Auflösung von 0,2 ns erreicht werden, was einem auflösbaren Abstand zweier Geräte 12 bis 15 von 4 cm entspricht.

An dieser Stelle soll nun auf den zweiten, parallel durchgeführten und dem Verfahrensschritt S7d folgenden Verfahrenszweig eingegangen werden. Nachdem im Verfahrensschritt S7b bereits der zu dem ersten Signalmerkmal SM1 korrespondierende erste Masterzählerstand $C_X$ erfasst und auch in Form des Masterzählerstands $C_{XM1}$ gespeichert worden ist, wird anschließend bei einem Eintreffen des zweiten Signalmerkmals SM2 des Signals 16 an dem Mastergerät 12 in einem Verfahrensschritt S9b ein zu diesem Eintreffen des zweiten Signalmerkmals SM2 korrespondierender Masterzählerstand $C_{XM2}$ erfasst und beispielsweise in dem dritten Masterregister 28 abgespeichert.

Relativ zu der lokalen Mastertaktfrequenz $F_{CLM}$ kann ein Zeitabstand zwischen den beiden Signalmerkmalen SM1 und SM2 oder zwischen deren jeweiligem Eintreffen oder zwischen den Eintreffzeitpunkten der Signalmerkmalen SM1 und SM2 an dem Mastergerät 12 bestimmt werden. Der Eintreff Zeitpunkt $t_{XM}$ des ersten Signalmerkmals SM1 an dem Mastergerät 12 wird im Folgenden auch als $t_{XM1}$ bezeichnet. $t_{XM1}$ und der Zeitpunkt $t_{XM2}$ des Eintreffens des zweiten Signalmerkmals SM2 ergeben sich damit zu:

$$t_{XM1} = C_{XM1} / f_{CLM} \quad \text{und} \quad t_{XM2} = C_{XM2} / f_{CLM} \quad (8)$$

Der zeitliche Abstand zwischen den Signalmerkmalen SM1 und SM2, das heißt die Zeitdifferenz

$$\Delta T_{XMM} = t_{XM1} - t_{XM2} = (C_{XM2}/f_{CLM}) - (C_{XM1}/f_{CLM}) = \Delta C_{XMM} / f_{CLM} \quad (9)$$

ist für die Nachricht X eine feste Größe und somit ist der absolute zeitliche Abstand zwischen den Signalmerkmalen SM1 und SM2 unabhängig von der lokalen Taktfrequenz $f_{CLM}$ oder einer entsprechenden lokalen Taktfrequenz des sendenden Geräts, hier also des ersten Geräts 14, welches die Nachricht X ausgesendet hat. $\Delta C_{XMM}$ bezeichnet eine Differenz der Zählerstände $C_{XM2}$ und $C_{XM1}$ und entspricht einer Anzahl von Zähltakten, welche der Masterzähler 20 zwischen dem Eintreffen des ersten Signalmerkmals SM1 und dem Eintreffen des zweiten Signalmerkmals SM2 erfasst oder gezählt hat.

In dem Mastergerät 12 und/oder von der Auswerteeinrichtung wird in einem anschließenden Verfahrensschritt S10b eine Anzahl $\Delta C_X$ von Takten berechnet oder bestimmt, welche von dem ersten Gerät 14 zum Senden der Nachricht X verwendet wurde. Diese Anzahl $\Delta C_X$ kann basierend auf der in dem ersten Netzwerk 10 oder auf dem Bus 11 verwendeten Modulationsart, einem entsprechenden Protokoll, einem verwendeten Bussystem und/oder einer ähnlichen in dem ersten Netzwerk 10 fest vorgegebenen und bekannten Größe bestimmt werden. Beispielsweise kann der Bus 11 als CAN-Bus mit einer nominellen oder spezifizierten Datenrate von 500.000 bit/s betrieben werden, sodass ein Takt bestimmungsgemäß 2 $\mu$s lang ist. Die Anzahl $\Delta C_X$ kann aus der Differenz der beiden Zeitpunkte $t_{XM1}$ und $t_{XM2}$ beziehungsweise aus den zu diesen Zeitpunkten $t_{XM1}$ und $t_{XM2}$ korrespondieren Masterzählerständen ermittelt werden, wobei auch die nominelle Taktlänge von hier beispielsweise 2 $\mu$s berücksichtigt werden kann. Dieses Vorgehen ist jedoch explizit nicht auf den CAN-Bus beschränkt, sondern kann auf anderen Bussystemen analog eingesetzt werden.

$\Delta C_X$ kann beispielsweise eine ganze Zahl sein und somit die Anzahl ganzer oder vollständiger Takte angeben, welche von der Signalquelle, das heißt dem die Nachricht X sendenden Gerät, zwischen den beiden Signalmerkmalen SM1 und SM2 abgewartet oder verwendet wurden. Es kann auch möglich sein, bei einem entsprechend variablen oder flexiblen Netzwerk und/oder Übertragungsprotokoll $\Delta C_X$ zu bestimmen, indem anstelle der nominellen oder spezifizierten Taktlänge eine tatsächlich von dem Quellgerät verwendete Taktlänge berücksichtigt wird. Diese kann relativ zu der Mastertaktfrequenz $f_{CLM}$ bestimmt werden. Diese tatsächlich verwendete Taktlänge kann beispielsweise durch eine entsprechende Überwachung und Auswertung des eingehenden Signals 16 in dem Mastergerät 12 erfolgen. Hierbei kann beispielsweise auch eine andere bekannte Größe, wie etwa eine auf den Takt bezogene Datenrate, das heißt beispielsweise eine Datenmenge pro Takt, berücksichtigt werden, welche unabhängig sein kann von der tatsächlichen Taktlänge.

Für die Zeitdifferenz $\Delta T_{XQ}$ bezogen auf die tatsächliche Signalquelle Q der Nachricht X ergibt sich:

$$\Delta T_{XQ} = t_{XQ2} - t_{XQ1} = \Delta C_X \ / \ f_{CLQ} = \Delta T_{XMM} = \Delta C_{XMM} \ / \ f_{CLM} \qquad (10)$$

Hierin ist $f_{CLQ}$ die lokale Taktfrequenz der tatsächlichen Signalquelle Q der Nachricht X.

Damit ist ein Verhältnis der Anzahl $\Delta C_X$ von zwischen den Signalmerkmalen SM1 und SM2 von der Signalquelle Q - hier also vorgeblich des ersten Geräts 14 - verwendeten Takte zu der Anzahl $\Delta C_{XMM}$ der von dem Mastergerät 12 zwischen den Signalmerkmalen SM1 und SM2 gezählten Takte des Mastertaktgebers 19 abhängig von einer relativen Taktfrequenzabweichung $\Delta f_{QMrel}$ zwischen dem Mastergerät 12 und der Signalquelle Q:

$$\Delta C_X \ / \ \Delta C_{XMM} = f_{CLQ} \ / \ f_{CLM}$$
$$= f_{CLM} \cdot (1 + \Delta f_{QMrel}) \ / \ f_{CLM} = 1 + \Delta f_{QMrel} \qquad (10)$$

Diese relative Taktfrequenzabweichung

$$\Delta f_{QMrel} = (\Delta C_X \ / \ \Delta C_{XMM}) - 1 \qquad (11)$$

stellt eine charakteristische Größe für eine bestimmte Konfiguration, das heißt für eine bestimmte Kombination zwischen spezifischen Geräten dar und kann somit zur Identifikation der Signalquelle der Nachricht X gegenüber dem Mastergerät 12 dienen oder verwendet werden.

Die relative Takt Frequenzabweichung $\Delta f_{QMrel}$ wird in einem Verfahrensschritt S11b für die Nachricht X als Frequenzmuster FPat(X) berechnet. Da von Taktgebern vorgegebene Taktfrequenzen allgemein temperaturabhängig sein können, das heißt sich mit einer verändernden Temperatur des jeweiligen Taktgebers verändern können, werden bei der Berechnung des Frequenzmusters FPat(X) jeweilige Temperaturdaten T berücksichtigt. Vorliegend würden also hier die Temperaturen des Mastertaktgebers 19 und eine Temperatur des ersten Geräts 14, von dem die Nachricht X vorgeblich stammt, mit in die Berechnung einfließen und/oder in einer weiteren Auswertung berücksichtigt werden.

Diese weitere Auswertung schließt einen in einem Verfahrensschritt S12b durchgeführten Schwellwertvergleich eines Betrags einer Differenz zwischen dem Frequenzmuster FPat(X) und dem entsprechenden in Verfahrensschritt S2 ermittelten Sollwert für die Signalquelle der Nachricht X ein. Da hier beispielsweise die Nachricht X laut CAN-Identifier von dem ersten Gerät 14 stammt, würden also das Sollfrequenzmuster für eine von dem ersten Gerät 14 an das Mastergerät 12 gesendete Nachricht herangezogen werden. Dieser Schwellwertvergleich kann analog zu dem Verfahrensschritt es 12 durchgeführt werden. Beispielsweise kann eine in einem entsprechenden Datenblatt spezifizierte Frequenzabweichung eines Schwingquarzes des jeweiligen Taktgebers +/- 40 Hz betragen und in diesem Fall würde also der Schwellwert auf eine Frequenzabweichung von 44 Hz festgelegt werden, entsprechend der plausiblen Frequenzabweichung zuzüglich 10 %.

Auch hier muss selbstverständlich die lokale Taktfrequenz $f_{CLM}$ hinreichend groß sein, um auch relativ kleine Frequenzabweichungen, beispielsweise in der Größenordnung $10^{-5}$ über eine relativ kurze Zeit von beispielsweise $\Delta T_{XX} \approx 10^{-4}$ s messen zu können. Daher bietet sich auch hier vorteilhaft als Alternative an, ein interpolierendes Time-Digital-Conversion Verfahren einzusetzen, um so die notwendige Höhe oder Größe der Taktfrequenz $f_{CLM}$ möglichst gering halten und mit möglichst geringem Aufwand realisieren zu können.

Wird in dem Schwellwertvergleich in Verfahrensschritt S12b keine Anomalie detektiert, da die Differenz oder Abweichung des für die Nachricht X ermittelten Frequenzmusters FPat(X) von dem entsprechenden Sollwert kleiner ist als der Schwellwert, so wird in einem Verfahrensschritt S13b auch hier in den Normalbetrieb 31 übergegangen oder der Normalbetrieb 31 wird fortgesetzt. Wird hingegen im Verfahrensschritt S12b eine Anomalie erkannt, so wird auch hier in einem Verfahrensschritt S14b in den Anomaliebetrieb 32 gewechselt.

In dem Normalbetrieb 31 kann eine Überwachung des ersten Netzwerks 10 mit dem hier beschriebenen Verfahren kontinuierlich, das heißt für jede in dem ersten Netzwerk 10 gesendete Nachricht durchgeführt werden. Es ist auch möglich, die beschriebenen Anomalieprüfungen nur für bestimmte Nachrichten oder Signale durchzuführen, welche beispielsweise zufällig oder nach einem vorbestimmten Kriterium ausgewählt oder festgelegt werden können.

Insgesamt zeigt das Beispiel, wie eine Laufzeit- und Frequenzdifferenzüberwachung in einem Netzwerk zur Anomaliedetektion bereitgestellt werden kann.

Bezugszeichenliste

| | |
|---|---|
| 10 | erstes Netzwerk |
| 11 | Bus |
| 12,12b | Mastergerät |
| 13 | Clientgerät |
| 14 | erstes Gerät |
| 15 | zweites Gerät |
| 16 | Signal |
| 17 | Schnittstelle |
| 18 | Auswahllogik |
| 19 | Mastertaktgeber |
| 20 | Masterzähler |
| 21 | Masterregister |
| 22 | Clienttaktgeber |
| 23 | Clientzähler |
| 24 | Clientregister |
| 25 | zweites Netzwerk |
| 26 | zweites Masterregister |
| 27 | zweiter Masterzähler |
| 28 | drittes Masterregister |
| 29 | drittes Gerät |
| 30 | Ablaufplan |
| 31 | Normalbetrieb |
| 32 | Anomaliebetrieb |
| S1 | Start |
| S2 bis S14 | Verfahrensschritte |
| S6b bis S14b | Verfahrensschritte |
| S7c, S7d | Pfade |
| SM1 | erstes Signalmerkmal |
| SM2 | zweites Signalmerkmal |
| T | Temperaturdaten |

**Patentansprüche**

1. Verfahren (30) zur Überwachung eines zur Datenübertragung vorgesehenen Netzwerks (10, 25) aus mehreren über fest vorgegebene Signalübertragungswege (11) miteinander verbundenen Geräten (12, 12b, 13, 14, 15, 29) auf Anomalien, wobei

   - eines der Geräte (12, 12b, 13, 14, 15, 29) ein Mastergerät (12, 12b) ist, welches einen Zähler (20, 27) und eine Triggereinrichtung (18) aufweist, von der ein vorgegebenes Signalmerkmal (SM1) eines über das Netzwerk (10, 25) übertragenen Signals (16) erfasst wird, und

- auf das Erfassen des Signalmerkmals (SM1) hin ein zu einem Zeitpunkt des Erfassens korrespondierender Masterzählerstand des Zählers (20, 27) des Mastergeräts (12, 12b) ausgelesen wird, wobei
- eine Auswerteeinrichtung unter vorbestimmten anomaliefreien Bedingungen einen Sollwert zumindest eines netzwerkspezifischen, durch eine physikalische Eigenschaft des Netzwerks bedingten Parameters ermittelt, und
- von der Auswerteeinrichtung aus einer Differenz zwischen dem ausgelesenen Masterzählerstand und einem weiteren Zählerstand ein jeweiliger Istwert des zumindest einen netzwerkspezifischen Parameters (Pat) ermittelt wird und
- eine Anomalie signalisiert wird, falls ein vorbestimmtes Abweichungskriterium zwischen dem Istwert und dem Sollwert erfüllt ist,

**dadurch gekennzeichnet, dass**

- eine Referenznachricht (R) oder ein entsprechendes Referenzsignal an das Mastergerät (12) gesendet wird, in welcher Referenznachricht (R) als Information ein Referenzclientzählerstand (CRC) enthalten ist,
- dass ein Referenzmasterzählerstand (CRM) aus dem Masterzähler (20,27) verwendet wird,
- dass ein Mastertaktgeber (19) und Clienttaktgeber (22) verwendet werden,
- ein Laufzeitmuster des Signals (16) in dem Netzwerk (10) den zumindest einen netzwerkspezifischen Parameter darstellt und es für die Ermittlung von dessen Istwert vorgesehen ist, dass
- eines der Geräte (12, 13, 14, 15, 29) des Netzwerks (10) ein Clientgerät (13) ist, das ebenfalls einen Zähler (23) und eine Triggereinrichtung (18) aufweist,
- das Signal (16) über das Netzwerk (10) sowohl an das Mastergerät (12) als auch an das Clientgerät (13) übertragen wird, und
- das vorgegebene Signalmerkmal (SM1) von der Triggereinrichtung (18) des Clientgeräts (13) erfasst und ein zu einem Zeitpunkt dieses Erfassens korrespondierender Clientzählerstand (CRC) des Zählers (23) des Clientgeräts (13) ausgelesen wird, wobei
- der Istwert des Laufzeitmusters basierend auf dem Clientzählerstand ermittelt wird, der als der weitere Zählerstand dient.

2. Verfahren (30) nach Anspruch 1,
   **dadurch gekennzeichnet, dass**

   - von dem Clientgerät (13) ein Referenzsignal an das Mastergerät (12) übermittelt wird, in dem ein ausgelesener, zu einem Sendezeitpunt eines vorgegebenen Signalmerkmals des Referenzsignals korrespondierender Referenzclientzählerstand an das Mastergerät (12) übermittelt wird,
   - das vorgegebene Signalmerkmal des Referenzsignals von der Triggereinrichtung (18) des Mastergeräts (12) erfasst und ein zu einem Zeitpunkt des Erfassens des vorgegebenen Signalmerkmals des Referenzsignals korrespondierender Referenzmasterzählerstand ausgelesen wird, und
   - zur Ermittlung des Istwerts des Laufzeitmusters auch der Referenzclientzählerstand und der Referenzmasterzählerstand herangezogen werden.

3. Verfahren (30) nach Anspruch 2,
   **dadurch gekennzeichnet, dass** das der Istwert des Laufzeitmusters Pat des Signals (16) berechnet wird durch

$$Pat = [C_{XM} - C_{XC}] - [C_{RM} - C_{RC}] = [C_{XM} - C_{RM}] - [C_{XC} - C_{RC}],$$

wobei

$C_{XM}$ den zu dem Signalmerkmal (SM1) korrespondierenden Masterzählerstand angibt,
$C_{XC}$ den zu dem Signalmerkmal (SM1) korrespondierenden Clientzählerstand angibt,
$C_{RM}$ den Referenzmasterzählerstand angibt, und
$C_{RC}$ den Referenzclientzählerstand angibt.

4. Verfahren (30) nach einem der Ansprüche 1 bis 3,
   **dadurch gekennzeichnet, dass**

   - der Istwert des Laufzeitmusters zusätzlich auch von einem zur Durchführung eigenständiger Berechnungen eingerichteten clientseitigen Teil der Auswerteeinrichtung ermittelt wird und
   - die Anomalie signalisiert wird, falls das Abweichungskriterium zwischen dem jeweiligen ermittelten Istwert und dem Sollwert von der Auswerteeinrichtung und/oder von dem clientseitigen Teil der Auswerteeinrichtung als erfüllt erkannt wird.

**5.** Verfahren (30) nach einem der vorhergehenden Ansprüche,
**dadurch gekennzeichnet, dass** der zu dem vorgegebenen Signalmerkmal (SM1, SM2) korrespondierende Masterzählerstand zur Verbesserung einer Auflösung mittels eines interpolierenden Messverfahrens, insbesondere unter Verwendung eines Time-to-Digital-Converters, ermittelt wird.

**6.** Verfahren (30) nach einem der vorhergehenden Ansprüche,
**dadurch gekennzeichnet, dass** das Mastergerät (12, 12b) eine Auswahllogik (18) umfasst, mittels welcher das Signalmerkmal (SM1, SM2) selbsttätig ausgewählt und/oder vorgegeben wird, insbesondere in Abhängigkeit von einem in dem Netzwerk (10, 25) verwendeten Leitungscode und/oder einer in dem Netzwerk (10, 25) verwendeten Modulationsart.

**Claims**

**1.** Method (30) for monitoring a network (10, 25) provided for data transmission, consisting of a plurality of devices (12, 12b, 13, 14, 15, 29) connected to one another over fixedly prescribed signal transmission paths (11), for anomalies, wherein

- one of the devices (12, 12b, 13, 14, 15, 29) is a master device (12, 12b) that has a counter (20, 27) and a trigger apparatus (18), by which a prescribed signal feature (SM1) of a signal (16) transmitted via the network (10, 25) is acquired, and
- upon the acquisition of the signal feature (SM1), a master counter state, corresponding to a time of the acquisition, of the counter (20, 27) of the master device (12, 12b) is read,
wherein
- an evaluation apparatus determines, under predetermined anomaly-free conditions, a setpoint value of at least one network-specific parameter defined by a physical property of the network, and
- a respective actual value of the at least one network-specific parameter (Pat) is determined by the evaluation apparatus from a difference between the read master counter state and a further counter state, and
- an anomaly is indicated if a predetermined deviation criterion between the actual value and the setpoint value is met,

**characterized in that**

- a reference message (R) or a corresponding reference signal is sent to the master device (12), which reference message (R) contains a reference client counter state (CRC) as information,
- a reference master counter state (CRM) from the master counter (20, 27) is used,
- a master clock generator (19) and a client clock generator (22) are used,
- a propagation time pattern of the signal (16) in the network (10) constitutes the at least one network-specific parameter and it is provided, for determining its actual value, for
- one of the devices (12, 13, 14, 15, 29) of the network (10) to be a client device (13) that likewise has a counter (23) and a trigger apparatus (18),
- the signal (16) to be transmitted via the network (10) both to the master device (12) and to the client device (13), and
- the prescribed signal feature (SM1) to be acquired by the trigger apparatus (18) of the client device (13) and a client counter state (CRC), corresponding to a time of this acquisition, of the counter (23) of the client device (13) to be read, wherein
- the actual value of the propagation time pattern is determined on the basis of the client counter state, which serves as the further counter state.

**2.** Method (30) according to Claim 1,
**characterized in that**

- a reference signal is transmitted from the client device (13) to the master device (12) in which a read reference client counter state corresponding to a sending time of a prescribed signal feature of the reference signal is transmitted to the master device (12),
- the prescribed signal feature of the reference signal is acquired by the trigger apparatus (18) of the master device (12) and a reference master counter state, corresponding to a time of the acquisition of the prescribed signal feature of the reference signal, is read, and
- the reference client counter state and the reference master counter state are also used to determine the actual value of the propagation time pattern.

3. Method (30) according to Claim 2,
**characterized in that**
the actual value of the propagation time pattern Pat of the signal (16) is calculated by

$$Pat = [C_{XM} - C_{XC}] - [C_{RM} - C_{RC}] = [C_{XM} - C_{RM}] - [C_{XC} - C_{RC}],$$

wherein

$C_{XM}$ indicates the master counter state corresponding to the signal feature (SM1),
$C_{XC}$ indicates the client counter state corresponding to the signal feature (SM1),
$C_{RM}$ indicates the reference master counter state, and
$C_{RC}$ indicates the reference client counter state.

4. Method (30) according to one of Claims 1 to 3, **characterized in that**

- the actual value of the propagation time pattern is additionally determined by a client-side part of the evaluation apparatus that is configured so as to perform its own calculations, and
- the anomaly is indicated if the deviation criterion between the respective determined actual value and the setpoint value is recognized as being met by the evaluation apparatus and/or by the client-side part of the evaluation apparatus.

5. Method (30) according to one of the preceding claims,
**characterized in that**
the master counter state corresponding to the prescribed signal feature (SM1, SM2), in order to improve a resolution, is determined by way of an interpolating measurement method, in particular using a time-to-digital converter.

6. Method (30) according to one of the preceding claims,
**characterized in that**
the master device (12, 12b) comprises a selection logic unit (18), by way of which the signal feature (SM1, SM2) is selected and/or prescribed automatically, in particular depending on a line code used in the network (10, 25) and/or a type of modulation used in the network (10, 25).

**Revendications**

1. Procédé (30) pour surveiller un réseau (10, 25) conçu pour la transmission de données à partir de plusieurs appareils (12, 12b, 13, 14, 15, 29) reliés entre eux par le biais de trajets de transmission de signal (11) prédéfinis de manière fixe en vue de détecter des anomalies,

- l'un des appareils (12, 12b, 13, 14, 15, 29) étant un appareil maître (12, 12b), lequel possède un compteur (20, 27) et un dispositif de déclenchement (18), par lequel est détectée une caractéristique de signal (SM1) prédéfinie d'un signal (16) transmis par le biais du réseau (10, 25), et
- sur détection de la caractéristique de signal (SM1), un état de compteur maître, qui correspond à un instant de la détection, du compteur (20, 27) de l'appareil maître (12, 12b) étant relevé,
- un dispositif d'interprétation déterminant, sous des conditions d'absence d'anomalie prédéterminées, une valeur de consigne d'au moins un paramètre spécifique au réseau, conditionné par une propriété physique du réseau, et
- une valeur réelle de l'au moins un paramètre spécifique au réseau (Pat) étant déterminée par le dispositif d'interprétation à partir d'une différence entre l'état de compteur maître relevé et un état de compteur supplémentaire et
- une anomalie étant signalée dans le cas où un critère d'écart prédéterminé est rempli entre la valeur réelle et la valeur de consigne,

**caractérisé en ce que**

- un message de référence (R) ou un signal de référence correspondant est envoyé à l'appareil maître (12), lequel message de référence (R) contient comme information un état de compteur client de référence (CRC),
- **en ce qu'**un état de compteur maître de référence (CRM) du compteur maître (20, 27) est utilisé,
- **en ce qu'**un transmetteur d'horloge maître (19) et un transmetteur d'horloge client (22) sont utilisés,
- un modèle de temps de propagation du signal (16) dans le réseau (10) représente l'au moins un paramètre spécifique au réseau et, pour la détermination de sa valeur réelle, il est prévu que
- l'un des appareils (12, 13, 14, 15, 29) du réseau (10) est un appareil client (13), lequel possède également un compteur (23) et un dispositif de déclenchement (18),
- le signal (16) est transmis par le biais du réseau (10) à la fois à l'appareil maître (12) et à l'appareil client (13), et
- la caractéristique de signal (SM1) prédéfinie est détectée par le dispositif de déclenchement (18) de l'appareil client (13) et un état de compteur client (CRC), qui correspond à un instant de cette détection, du compteur (23) de l'appareil client (13) est relevé,
- la valeur réelle du modèle de temps de propagation étant déterminée en se basant sur l'état de compteur client, lequel sert d'état de compteur supplémentaire.

2. Procédé (30) selon la revendication 1,
**caractérisé en ce que**

- un signal de référence est communiqué par l'appareil client (13) à l'appareil maître, dans lequel un état de compteur client de référence, qui correspond à un instant d'émission d'une caractéristique de signal prédéfinie du signal de référence, est communiqué à l'appareil maître (12),
- la caractéristique de signal prédéfinie du signal de référence est détectée par le dispositif de déclenchement (18) de l'appareil maître (12) et un état de compteur maître de référence, qui correspond à un instant de la détection de la caractéristique de signal prédéfinie du signal de référence, est relevé, et
- l'état de compteur client de référence et l'état de compteur maître de référence sont également utilisés pour la détermination de la valeur réelle du modèle de temps de propagation.

3. Procédé (30) selon la revendication 2,
**caractérisé en ce que**
la valeur réelle du modèle de temps de propagation Pat du signal (16) est calculée par

$$\mathtt{Pat} = [C_{XM} - C_{XC}] - [C_{RM} - C_{RC}] = [C_{XM} - C_{RM}] - [C_{XC} - C_{RC}],$$

où

$C_{XM}$ indique l'état de compteur maître qui correspond à la caractéristique de signal (SM1),
$C_{XC}$ indique l'état de compteur client qui correspond à la caractéristique de signal (SM1),
$C_{RM}$ indique l'état de compteur maître de référence, et
$C_{RC}$ indique l'état de compteur client de référence.

4. Procédé (30) selon l'une des revendications 1 à 3, **caractérisé en ce que**

- la valeur réelle du modèle de temps de propagation est en plus déterminée également par une partie côté client du dispositif d'interprétation qui est conçue pour effectuer des calculs autonomes et
- l'anomalie est signalée dans le cas où le critère d'écart entre la valeur réelle respectivement déterminée et la valeur de consigne est reconnu comme rempli par le dispositif d'interprétation ou par la partie côté client du dispositif d'interprétation.

5. Procédé (30) selon l'une des revendications précédentes,
**caractérisé en ce que**
l'état de compteur maître qui correspond à la caractéristique de signal (SM1, SM2) prédéfinie est déterminé en vue d'améliorer une résolution au moyen d'un procédé de mesure à interpolation, notamment en utilisant un convertisseur temps en numérique.

6. Procédé (30) selon l'une des revendications précédentes,
**caractérisé en ce que**

l'appareil maître (12, 12b) comporte une logique de sélection (18) au moyen de laquelle la caractéristique de signal (SM1, SM2) est sélectionnée et/ou prédéfinie automatiquement, notamment en fonction d'un code de ligne utilisé dans le réseau (10, 25) et/ou d'un type de modulation utilisé dans le réseau (10, 25).

Fig.1

Fig.2

Fig.3

**IN DER BESCHREIBUNG AUFGEFÜHRTE DOKUMENTE**

**In der Beschreibung aufgeführte Patentdokumente**

- US 20150074267 A1

- US 2014149805 A1